# EUROPEAN PATENT SPECIFICATION

(11) **EP 3 017 911 B1**
(45) Date of publication and mention of the grant of the patent: **19.04.2017**
(21) Application number: 14380034.0
(22) Date of filing: 05.11.2014
(51) Int. Cl.: B23Q 11/00, F16F 7/10, G05B 19/404

(54) **Dynamically stable machine tool**
Dynamisch stabiles Maschinenwerkzeug
Machine-outil dynamiquement stable

(43) Date of publication of application: 11.05.2016
(73) Proprietor: Ideko, S.Coop., 20870 Elgoibar Guipuzcoa (ES)
(72) Inventor: Merino Hernández, Ruben, 20870 Elgoibar (Guipuzcoa) (ES); Lizarralde Dorronsoro, Rafael, 20870 Elgoibar (Guipuzcoa) (ES)
(74) Representative: Cabinet Plasseraud

(56) References cited:
- EP-A2- 1 001 184
- US-A- 5 209 326

## Description

### Field of the Art

The present invention relates to the suppression or attenuation of vibrations produced during machining processes in machine tools incorporating a cantilevered moving element supporting the work tool. The invention specifically proposes a machine tool, such as a milling machine, a boring machine or a vertical lathe, incorporating an active inertial damping system integrated in the ram.

### State of the Art

The mechanical structures of machine tools tend to vibrate during machining operations at specific frequencies with different amplitudes, self-excited vibrations known as chatter occurring which can damage end part surface quality and actual machine integrity, causing premature wear or even breaking of the cutting tool and reducing the service life of the mechanical machine components.

Machine tools equipped with cantilevered moving elements, such as milling machines, boring machines or vertical lathes, for example, incorporating a ram have a highly variable dynamic response. Ram inertia and flexibility cause machine response to vary depending on the position in which the ram is located, such that machine mass distribution and both static and dynamic rigidity vary as the ram moves. This being the case, as the tool interacts with the part during cutting process, the machine behaves very differently depending on the position of the ram, producing great variations in machine cutting capacity.

For damping unwanted vibrations produced during machining, the use of both active and passive dampers is known. Passive dampers consist of a mass attached to the structure to be dampened by means of a dampened flexible attachment. The natural frequency of the passive damper is tuned so that it coincides with the natural frequency of the structure to be dampened. However, these passive dampers lose effectiveness when the dynamic parameters of the structure to be dampened vary, thus being rather ineffective for machine tools with moving elements, such as a ram, for example.

However, active dampers are capable of being adapted to dynamically changing means. These are formed by sensors which measure the vibration produced and actuators which allow introducing a force. In the case of active inertial dampers, this force is obtained by speeding up a moving mass suspended in the structure to be dampened, such that when the moving mass swings in the required direction an inertial force reducing the amplitude of the mechanical vibrations produced in the machine tool is generated. For example, the article by Cowley and Boyle published in 1970 discloses the use of an inertial actuator with an accelerometer for introducing an active damping on a machine tool structure. "Cowley, A.; Boyle, A.; Active dampers for machine tools; Annals of the CIRP, vol. 18, pp. 213-222, 1970*".*

Two-way inertial actuators are a type of active dampers capable of generating two independent forces that are orthogonal to one another. Due to their sizes, the integration of such actuators in the ram is complicated. Internally housing a two-way actuator involves opening large housings in the ram which leads to reduced rigidity, or involves increasing the general dimensions of the ram which leads to an increase in cost and redesign of the machine. Another alternative is to house the two-way actuator outside the ram; however, the possibilities of interference between the ram and the part increase considerably.

Spanish patent ES2425994 belonging to the same applicant as the present invention discloses a milling machine tool incorporating an inertial actuator in the cutting head. Although this solution allows improving the dynamic operating behaviour of the machine, since vibrations are dampened very close to the cutting point where the vibrations originate and the cutting head is a moving portion rotating with respect to the ram, the passage of input and control signals necessary for the inertial actuator is complicated and costly.

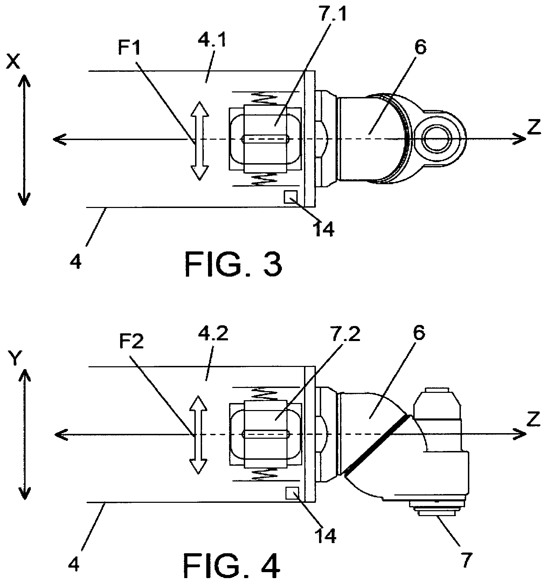

United States patent US6296093 discloses a machine tool with a cantilevered moving element (ram) incorporating two one-way inertial actuators, as seen in Figure 3. The inertial actuators are located at the end of the ram which is located closest to the cutting tool, on two contiguous side faces of the ram. Each inertial actuator is particularly adapted for generating a force perpendicular to the surface of the side face of the ram on which it is arranged, the two forces generated by both actuators being orthogonal to one another. Although this solution allows obtaining, with two one-way actuators, the same effect obtained with a two-way inertial actuator, since the generated forces are perpendicular to the surfaces of the side faces of the ram, there is a need to arrange the inertial actuators in the outer portion of the ram, such that dimensions of the ram increase, and therefore the possibilities of interferences occurring between the ram and the part during machining also increase.

Based on the foregoing, a machine tool with a vibration damping system that can be incorporated in the ram of the machine occupying as little space as possible, and thus providing a simple and effective alternative to the existing solutions, is necessary.

### Object of the Invention

The present invention proposes a machine tool incorporating an active inertial damping system integrated in the actual ram of the machine, which achieves suitable damping of vibrations with the damping system occupying minimal space and without having to increase the common general dimensions of the ram. The invention is applicable to any type of machine tool, such as a milling machine, a boring machine, a vertical lathe or a machining center, for example, incorporating a cantilevered element, such as a ram.

The machine tool of the invention comprises:
- a ram incorporating a machining head supporting a cutting tool, in which vibrations are produced during machining according to at least two main bending directions of the ram,
- sensors adapted for measuring the magnitude of the vibrations with which the ram swings in the main bending directions, and
- at least two substantially planar-shaped inertial actuators, where each inertial actuator is adapted for generating a force in one of the main bending directions of the ram, each inertial actuator being integrated on a side face of the ram according to an arrangement substantially parallel to said side face, and where the force generated by each inertial actuator is parallel to the side face of the ram on which the inertial actuator is integrated, and substantially perpendicular to the longitudinal section of the ram, the forces generated by the at least two inertial actuators being orthogonal to one another.

The substantially planar shape of the inertial actuators and the arrangement thereof parallel to the side faces of the ram prevents the actuators from protruding out of the body of the ram, these being incorporated on the actual side faces of the ram, whereby unwanted collisions with the part or other elements are prevented during machining. This configuration allows occupying minimal space in the ram, leaving the inside of the ram free for the passage of the driving spindle of the cutting tool.

The inertial actuators have been envisaged to be arranged at the end of the ram closest to the machining head supporting the cutting tool, because the closer the inertial actuator is to the cutting point where vibrations are generated, the lesser the force required for damping them, and therefore the smaller the size of the inertial actuator.

According to one embodiment of the invention, the ram incorporates two inertial actuators which are integrated on contiguous side faces of the ram, where one of the inertial actuators is adapted for generating a force in one of the main bending directions of the ram, and the other inertial actuator is adapted for generating another force in the other main bending direction of the ram.

According to another embodiment of the invention, the ram incorporates four inertial actuators, each integrated on a respective side face of the ram, where two of said inertial actuators are adapted for generating a respective force in one of the main bending directions of the ram, and the other two inertial actuators are adapted for generating another respective force in the other main bending direction of the ram.

According to another embodiment of the invention, the ram incorporates three inertial actuators, each integrated on a respective side face of the ram, and where two of said inertial actuators are adapted for generating a respective force in one of the main bending directions of the ram, and the other inertial actuator is adapted for generating another force in the other main bending direction of the ram.

Each inertial actuator is formed by a substantially planar-shaped upper plate and lower plate arranged such that their larger faces face one another, where the plates are suspended by their ends with respect to the ram in one of the main bending directions of the ram.

According to one embodiment of the invention, the sensors adapted for measuring the magnitude of the vibrations with which the ram swings are two single-axis accelerometers, each of which measures in real time the magnitude of the vibration with which the ram swings in one of its main bending directions. According to another embodiment, the sensors are triple-axis accelerometers measuring in real time the magnitude of the vibration with which the ram swings in the at least two main bending directions.

The sensors have been envisaged to be arranged in the ram close to the inertial actuators. Positioning the sensors as close as possible to the inertial actuators is particularly relevant, since the purpose of the inertial actuators is such that they swing with a force substantially identical to and in the opposite direction of the vibrations produced in the ram according to its at least two main bending directions.

Additionally, each inertial actuator has been envisaged to incorporate an accelerometer in one of the plates suspended with respect to the ram, such that the force which is being introduced by said inertial actuator can be measured. The data obtained by said accelerometer can therefore be used in advanced control techniques or in measuring dynamic flexibility (receptance) by means of obtaining frequency response functions.

A machine tool is thus obtained which, due to its constructive and functional features, results in a dynamically stable machine that allows effectively damping vibrations produced in the ram during machining processes.

### Description of the Drawings

Figure 1 shows a perspective view of a dynamically stable milling machine according to the present invention.
Figure 2 shows a perspective view of the inertial actuators integrated at the end of the ram closest to the machining head.
Figure 3 is a schematic elevational view of the arrangement of one of the inertial actuators depicted in Figure 2.
Figure 4 is a schematic profile view of the arrangement of the other inertial actuator depicted in Figure 2.
Figure 5 is a section view of two inertial actuators integrated on two contiguous side faces of the ram.
Figure 6 is a section view of four inertial actuators integrated on the four side faces of the ram.
Figure 7 shows a perspective view of a dynamically stable vertical lathe according to the present invention.

### Detailed Description of the Invention

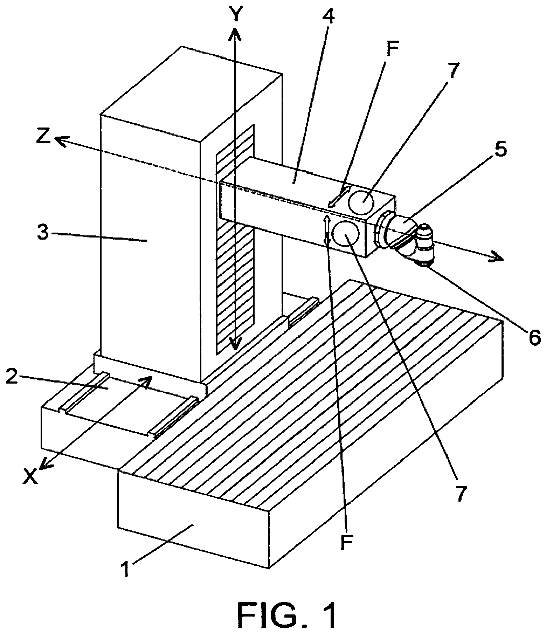

Figure 1 shows an embodiment of a dynamically stable machine tool according to the present invention. The machine tool depicted in Figure 1 is a milling machine comprising a workbench (1) on which the part to be machined is generally placed, a base (2) on which a column (3) is arranged, and a ram (4) arranged in the column (3) and incorporating at the end thereof a machining head (5) where the cutting tool (6) is located for machining the part.

The column (3) can move on the base (2) according to a first horizontal direction depicted by means of axis (X), whereas the ram (4) can move with respect to the column (3) according to a vertical direction depicted by means of axis (Y) and according to a second horizontal direction depicted by means of axis (Z). To that end, the ram (4) is mounted on a translation carriage (not depicted) with respect to which the ram (4) can move horizontally along axis (Z), whereas the translation carriage can in turn move with respect to the column (3) along axis (Y), the ram (4) therefore being able to move vertically along axis (Y).

The ram (4) can therefore be located in any spatial position by means of interpolating movements along the three axes (X, Y, Z). In any case and in a non-limiting manner, the column (3) could be fixed to the base (2), this being the case, the part to be machined arranged on the workbench (1) moves horizontally according to axis (X).

The ram (4) is an oblong element (it is longer than it is wide) arranged in a cantilevered manner with respect to the column (3); therefore and due to its inertia and flexibility, the ram is the machine part having the most influence on machine dynamic response, such that the machining process behaves very differently depending on the spatial position in which the ram (4) is located with respect to the column (3).

It has been proven by experiments that the critical vibration modes of the ram (4) correspond to its bending modes, such that the ram (4) tends to swing mainly in two directions parallel to axes (X) and (Y), so applying damping forces which are aligned with the main bending directions in which the ram (4) swings is particularly relevant for damping vibrations produced in the ram (4).

For damping these vibrations, at least two inertial actuators (7) are integrated in the ram (4), each of which applies a damping force (F) in one direction opposite the main bending directions in which the ram (4) swings, such that the inertial actuators (7) vibrate transmitting inertial forces to the ram (4) reducing the amplitude of the mechanical vibrations produced.

To assure proper vibration dissipation, the inertial actuators (7) are arranged at the end of the ram (4) closest to the cutting tool (6). This factor is particularly relevant since the farther the inertial actuators (7) are from the cutting point, the greater the force to be applied for damping vibrations, and therefore the larger the actuator size, and the space required for integrating it in the ram (4) must also be larger.

The ram (4) has a prismatic shape having a rectangular section with four side faces (4.1, 4.2, 4.3, 4.4), such that the at least two inertial actuators (7) are integrated on two side faces (4.1, 4.2) of the ram (4). In other words, the inertial actuators (7) are incorporated on the actual side faces (4.1, 4.2, 4.3, 4.4) of the ram, such that the thickness of the inertial actuator (7) is substantially identical to the thickness of the side face of the ram in which it is incorporated.

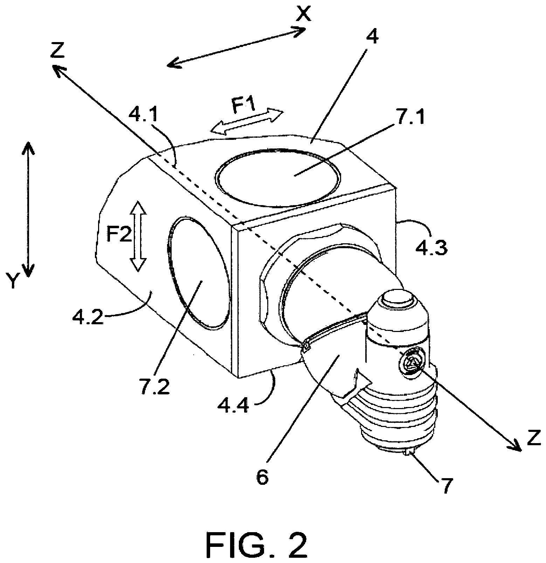

Therefore, as seen in detail in Figures 2 to 5, a first inertial actuator (7.1) is integrated on the first side face (4.1) of the ram (4), and a second inertial actuator (7.2) is integrated on the second side face (4.2) of the ram (4) contiguous to the first side face (4.1).

The inertial actuators (7) have a substantially planar shape allowing the integration thereof on the side faces (4.1, 4.2, 4.3, 4.4) of the ram (4) occupying minimal space, and leaving the inside of the ram (4) free for the passage of the driving spindle of the machining head (6) and of the work tool (7), as well as any other system necessary for machining.

Each of the inertial actuators (7) is particularly adapted for generating a force (F) parallel to the side face of the ram (4) on which it is arranged, such that the first inertial actuator (7.1) generates a first force (F1) parallel to the first side face (4.1) of the ram (4), and the second inertial actuator (7.1) generates a second force (F2) parallel to the second side face (4.1) of the ram (4). The first force (F1) is parallel to axis (X) and the second force (F2) is parallel to axis (Y), and they are both perpendicular to the longitudinal section of the ram (4), running along axis (Z), the first force (F1) and the second force (F2) therefore being orthogonal to one another.

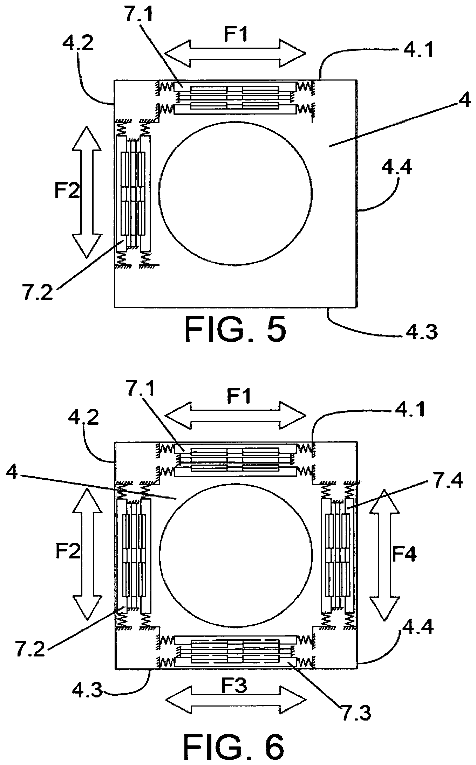

According to the embodiment shown in Figure 6, the ram (4) incorporates four inertial actuators (7), each of them being embedded in a respective side face (4.1, 4.2, 4.3, 4.4) of the ram (4). Therefore, in addition to the first and second inertial actuators (7.1, 7.2), a third inertial actuator (7.3) generating a third force (F3) parallel to the third side face (4.3) of the ram (4), and a fourth inertial actuator (7.4) generating a fourth force (F4) parallel to the fourth side face (4.4) of the ram (4) are arranged, where the third force (F3) is parallel to axis (X) and the fourth force (F4) is parallel to axis (Y), and they are both perpendicular to the longitudinal section of the ram (4). Therefore, by using four inertial actuators (7) the force required for damping vibrations is less than in the case of using only two inertial actuators (7); the force required is reduced by about half, and the size of the inertial actuators (7) and the space required for integration in the ram (4) are therefore smaller.

Another possible configuration is based on using three inertial actuators (7) located on three side faces of the ram (4), for example, the first and third inertial actuators (7.1, 7.3) applying forces (F1, F3) parallel to axis (X) and the second inertial actuator (7.2) applying a force (F2) parallel to axis (Y).

The amount of force required for each inertial actuator (7) will depend on the mass, rigidity and inherent damping of the ram (4), therefore the amount of force will be selected depending on the design characteristics of each machine and for the purpose achieving the required damping.

The machine has sensors which measure the magnitude of the vibrations produced in the ram (4). Specifically, the speed with which the ram (4) vibrates is measured indirectly by means of one or more accelerometers. Using two single-axis accelerometers for measuring the vibrations of the ram (4) parallel to axis (X) and axis (Y) has been envisaged, although a single triple-axis accelerometer measuring the vibrations of the ram (4) along the three axes (X, Y, Z) could be used. Locating the sensors in a fixed portion of the ram (4) along with the inertial actuators (7), i.e., the sensors and inertial actuators (7) are located substantially at the same point, is particularly relevant since the purpose of the inertial actuators (7) is such that they swing with a force substantially identical to and in the opposite direction of the vibrations produced in the ram (4).

The possibility of each inertial actuator (7) having an accelerometer associated therewith has been envisaged, such that the force which is being introduced by the inertial actuator (7) can be determined. The data obtained by said accelerometer can therefore be used in advanced control techniques or in measuring dynamic flexibility (receptance) by means of obtaining frequency response functions.

With this being the case, when the cutting tool (6) is machining a part, the ram (4) tends to vibrate mainly according to two main bending directions which are parallel to axes (X) and (Y). The speed with which the ram (4) is vibrating in each of its main bending directions is detected in real time by means of the sensors, such that upon detecting that vibration, the inertial actuators (7) are made to swing with a force substantially identical to and in the opposite direction of the vibrations being produced in the ram (4), damping them and improving machine dynamic response, whereas the force with which the inertial actuator (7) is swinging can be controlled by means of the accelerometer associated with the inertial actuator (7).

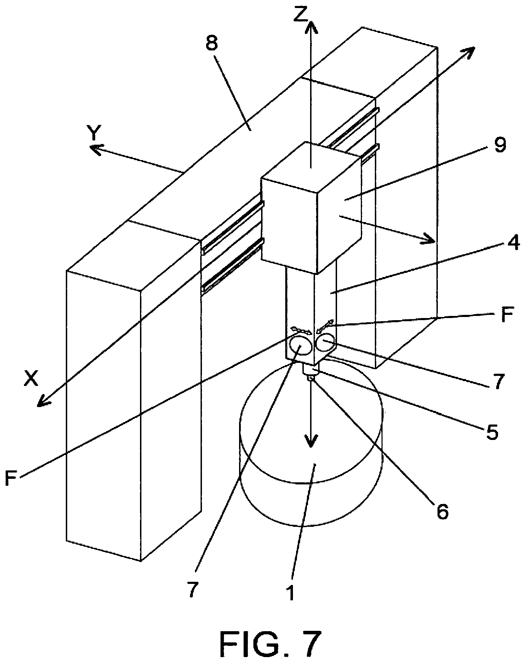

The invention has been described for the case of the ram (4) of a milling machine, although as seen in Figure 7, the invention can also be applicable to the ram (4) of a vertical lathe. The vertical lathe has a base (1) on which the part to be machined is arranged, a frame (8) on which a carriage (9) is mounted, and which in turn holds the ram (4) incorporating the machining head (5) and the cutting tool (6).

The carriage (9) is capable of moving according to a horizontal direction depicted by means of axis (X), whereas the ram (4) moves with respect to the carriage (9) in the vertical direction depicted by means of axis (Z). Therefore, the ram (4) is capable of moving according to two axes (X and Z), and it would also be possible for the ram (4) to perform a third horizontal translational movement along axis (Y).

In this case, when machining the part, vibrations are also produced in the ram (4) according to at least its two main bending directions, which are parallel to axes (X) and (Y), respectively. So inertial actuators (7) producing forces (F) parallel to the side faces of the ram (4) and substantially perpendicular to the longitudinal section of the ram (4), depicted by axis (Z), are also integrated on the side faces of the ram (4) for damping these vibrations, the forces (F) generated being of a magnitude substantially identical to and in the opposite direction of the vibrations produced in the ram (4) according to its main bending directions.

Although the embodiments shown in the drawings depict a ram (4) having a rectangular section, it is obvious for a person skilled in the art that the invention can also be applied to rams (4) with a different prismatic shape, such as a prismatic shape having a hexagonal section, for example.

## Claims

1. A dynamically stable machine tool, comprising:
- a ram (4) incorporating a machining head (5) supporting a cutting tool (6), in which vibrations are produced during machining according to at least two main bending directions of the ram (4),
- sensors adapted for measuring the magnitude of the vibrations with which the ram (4) swings in the main bending directions, and
- at least two inertial actuators (7), said dynamically stable machine tool being **characterised in that** the inertial actuators (7) are substantially planar, where each inertial actuator (7) is adapted for generating a force (F) in one of the main bending directions of the ram (4), each inertial actuator (7) being integrated on a side face of the ram (4) according to an arrangement substantially parallel to said side face, and where the force (F) generated by each inertial actuator (7) is parallel to the side face of the ram (4) on which it is integrated and substantially perpendicular to the longitudinal section of the ram (4), the forces (F) generated by the at least two inertial actuators (7) being orthogonal to one another.

2. The dynamically stable machine tool according to claim 1, wherein the inertial actuators (7) are integrated on contiguous side faces of the ram (4).

3. The dynamically stable machine tool according to claim 1, wherein the inertial actuators (7) are arranged at the end of the ram (4) closest to the machining head (5) supporting the cutting tool (6).

4. The dynamically stable machine tool according to claim 1, wherein the ram (4) incorporates four inertial actuators (7), each integrated on a respective side face of the ram (4), and where two of said inertial actuators (7) are adapted for generating a respective force (F) in one of the main bending directions of the ram (4), and the other two inertial actuators (7) are adapted for generating another respective force (F) in the other main bending direction of the ram (4).

5. The dynamically stable machine tool according to claim 1, wherein the ram (4) incorporates three inertial actuators (7), each integrated on a respective side face of the ram (4), and where two of said inertial actuators (7) are adapted for generating a respective force (F) in one of the main bending directions of the ram (4), and the other inertial actuator (7) is adapted for generating another force (F) in the other main bending direction of the ram (4).

6. The dynamically stable machine tool according to claim 1, wherein the sensors are two single-axis accelerometers, each of which measures in real time the magnitude of the vibration with which the ram (4) swings in one of the main bending directions.

7. The dynamically stable machine tool according to claim 1, wherein the sensors are triple-axis accelerometers, measuring in real time the magnitude of the vibration with which the ram (4) swings in the main bending directions.

8. The dynamically stable machine tool according to claim 1, wherein the sensors are arranged in the ram (4) close to the inertial actuators (7).

9. The dynamically stable machine tool according to claim 1, wherein each inertial actuator (7) incorporates an accelerometer.

## Patentansprüche

1. Ein dynamisch stabiles Maschinenwerkzeug umfassend:
- eine Ramme (4), die einen Maschinenkopf (5) zur Unterstützung eines Schneidwerkzeuges (6) enthält, in welcher Vibrationen während der Bearbeitung gemäß von mindestens zwei Biegerichtungen der Ramme (4) erzeugt werden,
- Sensoren, die zur Messung der Stärke der Vibrationen, mit welcher die Ramme (4) in den Hauptbiegerichtungen schwingt, angepasst sind, und
- mindestens zwei träge Stellantriebe (7), wobei das dynamisch stabile Maschinenwerkzeug **dadurch gekennzeichnet ist, dass** die trägen Stellantriebe (7) im Wesentlichen planar sind,
- wobei jeder träge Stellantrieb (7) angepasst ist, um eine Kraft (F) in einer der Hauptbiegerichtungen der Ramme (4) zu erzeugen, wobei jeder träge Stellantrieb (7) auf einer Seitenfläche der Ramme (4) gemäß einer Anordnung, die im Wesentlichen parallel zu der Seitenfläche ist, integriert ist, und wobei die Kraft (F), die durch jeden trägen Stellantrieb (7) erzeugt wird, parallel ist zu der Seitenfläche der Ramme (4), auf welcher dieser integriert ist und im Wesentlichen senkrecht zu dem longitudinalen Abschnitt der Ramme (4) ist, wobei die Kräfte (F), die durch die mindestens zwei trägen Stellantriebe (7) erzeugt werden, orthogonal zueinander sind.

2. Dynamisch stabiles Maschinenwerkzeug gemäß Anspruch 1, wobei die trägen Stellantriebe (7) auf benachbarten Seitenflächen der Ramme (4) integriert sind.

3. Dynamisch stabiles Maschinenwerkzeug gemäß Anspruch 1, wobei die trägen Stellantriebe (7) am Ende der Ramme (4) nahe dem Maschinenkopf (5) zur Abstützung des Schneidwerkzeuges (6) angeordnet sind.

4. Dynamisch stabiles Maschinenwerkzeug gemäß Anspruch 1, wobei die Ramme (4) vier träge Stellantriebe (7) enthält, wobei jeder auf einer jeweiligen Seitenfläche der Ramme (4) integriert ist, und wobei zwei der trägen Stellantriebe (7) angepasst sind, um eine jeweilige Kraft (F) in eine der Hauptbiegerichtungen der Ramme (4) zu erzeugen, und die anderen zwei trägen Stellantriebe (7) angepasst sind, um eine andere jeweilige Kraft (F) in der anderen Hauptbiegerichtung der Ramme (4) zu erzeugen.

5. Dynamisch stabiles Maschinenwerkzeug gemäß Anspruch 1, wobei die Ramme (4) drei träge Stellantriebe (7) enthält, wobei jeder auf einer jeweiligen Seitenfläche der Ramme (4) integriert ist, und wobei zwei der trägen Stellantriebe (7) angepasst sind, um eine jeweilige Kraft (F) in eine der Hauptbiegerichtungen der Ramme (4) zu erzeugen, und der andere träge Stellantrieb (7) angepasst ist, um eine weitere Kraft (F) in der anderen Hauptbiegerichtung der Ramme (4) zu erzeugen.

6. Dynamisch stabiles Maschinenwerkzeug gemäß Anspruch 1, wobei die Sensoren zwei einfach-achsige Beschleunigungsmesser sind, wobei jeder in realer Zeit die Größe der Vibration misst, mit welcher die Ramme (4) in eine der Hauptbiegerichtungen schwingt.

7. Dynamisch stabiles Maschinenwerkzeug gemäß Anspruch 1, wobei die Sensoren dreifach-achsige Beschleunigungsmesser sind, die in realer Zeit die Größe der Vibration messen, mit welcher die Ramme (4) in den Hauptbiegerichtungen schwingt.

8. Dynamisch stabiles Maschinenwerkzeug gemäß Anspruch 1, wobei die Sensoren in der Ramme (4) nahe zu den trägen Stellantrieben (7) angeordnet sind.

9. Dynamisch stabiles Maschinenwerkzeug gemäß Anspruch 1, wobei jeder träge Stellantrieb (7) einen Beschleunigungsmesser enthält.

## Revendications

1. Machine-outil dynamiquement stable, comprenant :
- un bélier (4) incorporant une tête d'usinage (5) supportant un outil de coupe (6), dans lequel des vibrations sont produites durant l'usinage selon au moins deux directions de flexion principales du bélier (4),
- des capteurs adaptés pour mesurer l'amplitude des vibrations avec lesquelles le bélier (4) oscille dans les directions de flexion principales, et
- au moins deux actionneurs inertiels (7), ladite machine-outil dynamiquement stable étant **caractérisée en ce que** les actionneurs inertiels (7) sont sensiblement plans,
où chaque actionneur inertiel (7) est adapté pour générer une force (F) dans l'une des directions de flexion principales du bélier (4), chaque actionneur inertiel (7) étant intégré sur une face latérale du bélier (4) selon un agencement sensiblement parallèle à ladite face latérale, et
où la force (F) générée par chaque actionneur inertiel (7) est parallèle à la face latérale du bélier (4) sur lequel il est intégré et sensiblement perpendiculaire à la section longitudinale du bélier (4), les forces (F) générées par les au moins deux actionneurs inertiels (7) étant orthogonales l'une à l'autre.

2. Machine-outil dynamiquement stable selon la revendication 1, dans laquelle les actionneurs inertiels (7) sont intégrés sur des faces latérales contiguës du bélier (4).

3. Machine-outil dynamiquement stable selon la revendication 1, dans laquelle les actionneurs inertiels (7) sont agencés à l'extrémité du bélier (4) la plus près de la tête d'usinage (5) supportant l'outil de coupe (6).

4. Machine-outil dynamiquement stable selon la revendication 1, dans laquelle le bélier (4) incorpore quatre actionneurs inertiels (7), chacun intégré sur une face latérale respective du bélier (4), et où deux desdits actionneurs inertiels (7) sont adaptés pour générer une force respective (F) dans l'une des directions de flexion principales du bélier (4), et les deux autres actionneurs inertiels (7) sont adaptés pour générer une autre force respective (F) dans l'autre direction de flexion principale du bélier (4).

5. Machine-outil dynamiquement stable selon la revendication 1, dans laquelle le bélier (4) incorpore trois actionneurs inertiels (7), chacun intégré sur une face latérale respective du bélier (4), et où deux desdits actionneurs inertiels (7) sont adaptés pour générer une force respective (F) dans l'une des directions de flexion principales du bélier (4), et l'autre actionneur inertiel (7) est adapté pour générer une autre force (F) dans l'autre direction de flexion principale du bélier (4).

6. Machine-outil dynamiquement stable selon la revendication 1, dans laquelle les capteurs sont deux accéléromètres uniaxiaux, dont chacun mesure en temps réel l'amplitude de la vibration avec laquelle le bélier (4) oscille dans l'une des directions de flexion principales.

7. Machine-outil dynamiquement stable selon la revendication 1, dans laquelle les capteurs sont des accéléromètres triaxiaux, mesurant en temps réel l'amplitude de la vibration avec laquelle le bélier (4) oscille dans les directions de flexion principales.

8. Machine-outil dynamiquement stable selon la revendication 1, dans laquelle les capteurs sont agencés dans le bélier (4) près des actionneurs inertiels (7).

9. Machine-outil dynamiquement stable selon la revendication 1, dans laquelle chaque actionneur inertiel (7) incorpore un accéléromètre.
